(19) Europäisches Patentamt / European Patent Office / Office européen des brevets

(11) **EP 2 997 832 B1**

(12) **EUROPEAN PATENT SPECIFICATION**

(45) Date of publication and mention
of the grant of the patent:
**18.09.2019 Bulletin 2019/38**

(51) Int Cl.:
***A23L 2/00*** *(2006.01)*     ***A23F 3/16*** *(2006.01)*
***A23L 2/02*** *(2006.01)*     ***A23L 2/52*** *(2006.01)*

(21) Application number: **14797977.7**

(22) Date of filing: **13.05.2014**

(86) International application number:
**PCT/JP2014/062695**

(87) International publication number:
**WO 2014/185399 (20.11.2014 Gazette 2014/47)**

(54) **POWDERED TEA BEVERAGE**

PULVERFÖRMIGES TEEGETRÄNK

BOISSON EN POUDRE À BASE DE THÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2013 JP 2013101694**

(43) Date of publication of application:
**23.03.2016 Bulletin 2016/12**

(73) Proprietor: **Suntory Holdings Limited
Kita-ku, Osaka-shi
Osaka 530-8203 (JP)**

(72) Inventors:
• **ASANO, Erika
Kawasaki-shi
Kanagawa 211-0067 (JP)**
• **IZUISHI, Satoko
Kawasaki-shi
Kanagawa 211-0067 (JP)**

(74) Representative: **Vossius & Partner
Patentanwälte Rechtsanwälte mbB
Siebertstrasse 3
81675 München (DE)**

(56) References cited:
EP-A1- 2 266 415     WO-A1-2013/035860
WO-A1-2013/035860     JP-A- S6 342 649
JP-A- S6 342 649     JP-A- H10 234 301
JP-A- S57 194 749     JP-A- 2001 061 412
JP-A- 2001 061 412     JP-A- 2003 259 805
JP-A- 2003 259 805     JP-A- 2005 304 436
JP-A- 2009 219 447     JP-A- 2013 055 906
US-A1- 2006 240 167     US-A1- 2011 014 347

**Description**

TECHNICAL FIELD

The present invention relates to a Matcha (fine powder tea)-containing beverage that contains a sufficient amount of Matcha.

BACKGROUND ART

Green tea leaves such as Gyokuro, Sencha and Bancha are produced by heating fresh tea leaves through steaming or roasting, then rubbing the leaves during the drying process to make Aracha (unprocessed tea), which is screened. A green tea beverage is extracted from these tea leaves. Meanwhile, Matcha is produced by steaming fresh tea leaves that have been obtained by shade cultivation, drying the leaves immediately thereafter (without rubbing the steamed leaves), then grinding the leaves into fine powder using a stone mortar. Those leaves are suspended as-is in hot water to be served as a beverage.

Due to the recent trend towards health consciousness which emphasizes the functionality of tea leaves, Matcha is attracting attention for its feature of allowing complete absorption of tea leaf components, and the Matcha-containing beverage market is growing. However, since heat sterilization was used to make the Matcha-containing beverage distributable at normal temperature, it caused a substantial weakening of the fine aroma intrinsic to Matcha, making the beverage less drinkable due to the astringency, bitterness and astringent taste being felt more vividly than the deep richness or the pleasant, moderate bitterness of the aftertaste intrinsic to Matcha. In addition, a problem existed that when a large amount of Matcha is added to the beverage, it leaves behind a foreign body sensation or a grainy feeling from the water-insoluble solid, making it difficult to use an amount that is sufficient for illuminating the flavor and functionality.

To ameliorate the above situation, Matcha-beverages have been proposed that achieve drinkability by adding sweetener components to Matcha (e.g. Patent Document 1 (p. 256, upper left)). In addition, products have been developed of Matcha-beverages that achieve a mellow taste from the richness of milk by adding milk components, such as milk or soy milk, and sweetener components to Matcha (e.g. Patent Document 2 [0032]).

Patent Document 3 discloses a tea extract extracted after treating tea leaves using a cellulase exhibiting little contaminating pectinase activity, and a tea beverage containing the same.

Patent Document 4 discloses a tea beverage which is obtained by mixing a powdered green tea with a tea enzyme-treated extract extracted from tea leaves treated with a cellulase exhibiting little contaminating pectinase activity.

CITATION LIST

PATENT DOCUMENTS

Patent Document 1: Japanese Publication No. S57-194749
Patent Document 2: Japanese Publication No. 2002-228953
Patent Document 3: WO 2013-035860
Patent Document 4: Japanese Publication No. 2013-055906

SUMMARY OF INVENTION

TECHNICAL PROBLEM

Tea beverages that include milk components such as milk or soy milk are not fit for enjoying the taste, aroma or color intrinsic to Matcha, since the richness of the milk components occupies the senses.

The object of the present invention is to provide a Matcha-containing beverage being a packaged beverage distributable under normal temperatures and obtained by heat sterilization, in which a sufficient Matcha content as well as drinkability is achieved.

SOLUTION TO PROBLEM

Adding a large amount of water-insoluble solid to illuminate flavor and functionality goes against drinkability, and people believed that a beverage that satisfies both is difficult to provide. The present inventors boldly attempted to solve the above problem, and performed extensive studies of beverages that are substantially free of milk components and have a sufficient Matcha content, and found that when Matcha is suspended in green tea extracts and grain extracts being extracts of roasted rice, and sweetener components are added, and further when the amount of the insoluble solid and the viscosity in the beverage are adjusted to a certain range, a Matcha-containing beverage that achieves both a deep richness (savor) intrinsic to Matcha and drinkability may be provided, and the lingering aroma or aftertaste after drinking the Matcha-containing beverage obtained by heat sterilization may be improved. Based on these findings, the present inventors completed the present invention.

In other words, the present invention encompasses the following embodiments without being limited thereby.

(1) A Matcha-containing beverage obtained by heat sterilization, that is substantially free of a milk component, the Matcha-containing beverage comprising Matcha, a green tea leaf extract, a grain extract being an extract of roasted rice, and a sweetener component, wherein an insoluble solid content per 100 mL of beverage is from 0.3 g to 0.9 g and wherein a viscosity at 20°C is from 1.5 to 6.5 mPa·s.

(2) The Matcha-containing beverage according to (1) further containing thickener polysaccharides.

(3) The Matcha-containing beverage according to any one of (1) to (2) containing noncentrifugal sugar as a sweetener component.

(4) The Matcha-containing beverage according to any one of (1) to (3), wherein the sweetener component consists of a saccharide sweetener.

ADVANTAGEOUS EFFECT OF INVENTION

The Matcha-containing beverage of the present invention containing a sufficient amount of Matcha is a beverage that provides a deep savor, aroma or color intrinsic to Matcha and drinkability without having to add any milk component, flavoring agent, or dye, etc. In other words, a Matcha-containing beverage that is at least one of flavoring agent-free, dye-free or emulsifier-free may be provided according to the present invention. Such beverages are useful for daily intake as beverages with a more natural taste, and as beverages that can be expected to provide Matcha functionality. Further, the beverages provide Matcha-containing beverages with a fresh aftertaste that are appreciated by those that find the lingering aroma or aftertaste of the Matcha-containing beverages obtained by heat sterilization disturbing, as well as lovers of Matcha-beverages.

DESCRIPTION OF EMBODIMENTS

The Matcha-containing beverage of the present invention comprises (a) Matcha, (b) green tea leaf extract and grain extract being extract of roasted rice, (c) sweetener component, and optionally (d) thickener polysaccharides, and it is substantially free of milk components. When a beverage is described as "substantially free of milk components" in the present invention, it means that the beverage contains 0.5 g or less, preferably 0.2 g or less milk solid per 100 mL of beverage. A particularly preferable embodiment is a beverage that contains no protein or fat that is derived from components other than the above components (a) to (d) (i.e. exogenous protein or fat). These components are described in detail below.

(a) Matcha

The Matcha of the present invention is a fine powder of tea leaves. In other words, Matcha is composed of Tencha (a kind of green tea) produced by steaming fresh tea leaves that have been obtained by shade cultivation, drying the leaves immediately thereafter, in which Tencha is subjected to fine grinding using a stone mortar, a machine or by freeze grinding (the so called Matcha). Matcha also includes ground Hojicha (roasted tea) for convenience's sake. Ground Hojicha is the so called Hojicha, such as Hoji Bancha, Kyo Bancha, Karigane Hojicha, Hoji Sencha, that has been subjected to fine grinding by the above grinding means.

The Matcha-containing beverage of the present invention contains ground Tencha as an essential component for providing the taste and aroma intrinsic to Matcha. When the above ground Hojicha is added to the Tencha, it suppresses the weakening of the fine aroma of Matcha (ground Tencha) caused by heat sterilization, so a beverage containing ground Tencha and ground Hojicha tea leaves is one example of a preferable embodiment of the present invention. Preferable ground Hojicha tea leaves are ground Hojicha tea leaves roasted to a luminosity (L value) of about 40 to 52 when measured by a differential colorimeter (e.g. Spectro Color Meter SE2000 (Nippon Denshoku Industries Co., Ltd.)). The amount of the ground Hojicha tea leaves to be added is about 1 to 30 wt%, preferably 1 to 10 wt% against the total amount of Matcha. The fresh green color of the ground Tencha may diminish when the ground Hojicha is added in an amount over 30 wt% against the total amount of Matcha.

In order to obtain Matcha with a good texture (felt by the tongue) and a good sensation going down the throat, which is drinkable, the tea leaves should be ground ultrafine to an average particle size of 100 μm or lower, preferably 50 μm or lower, and more preferably 20 μm or lower.

The Matcha-containing beverage of the present invention is characterized by including Matcha in an amount that allows one to enjoy the intrinsic taste and aroma of Matcha, and that would exhibit the function of Matcha. Specifically, Matcha is added in an amount that provides a water-insoluble solid content of 0.3 to 0.9 g, preferably 0.4 to 0.9 g, and more preferably about 0.4 to 0.8 g against 100 mL of the beverage. The water-insoluble solid in the present invention is explained in the Examples hereinafter, and it is the solid (weight) obtained by collecting the insoluble solid in the beverage on the filter paper and drying it. When the water-insoluble solid content per 100 mL of beverage is less than 0.3 g, it becomes difficult to feel the richness and the proper bitterness of Matcha, and when the water-insoluble solid content is over 0.9 g per 100 mL of the beverage, the effect of the present invention is lost, and a grainy feeling occurs while drinking, or the beverage may leave an unpleasant lingering aroma or aftertaste after drinking that is specific to a Matcha-containing beverage obtained by heat sterilization.

(b) Green Tea Leaf Extract and Grain Extract being an extract of roasted rice.

The Matcha-containing beverage of the present invention is characterized by suspending the Matcha in a green tea leaf extract and grain extract being an extract of roasted rice. The green tea leaf extract is an extract of green tea leaves other than Tencha, specifically extracts of steamed, non-fermented tea leaves of Sencha, Bancha, Kukicha, Hojicha, Gyokuro, Kabusecha, and sweet tea. A grain extract is an extract of grains that can be used in a beverage, specifically extracts of rice (roasted rice, brown rice, etc.), wheat (barley, naked barley, etc.), hatomugi (job's tears), buckwheat (kernels of buckwheat fruit body of Japanese buckwheat, Tartary buckwheat).

In the present invention, an extract of roasted rice as the grain extract is used in view of flavor. It is preferable to use a green tea extract of Sencha, etc. and an extract of roasted rice in combination.

(c) Sweetener Component

The sweetener component to be added to the beverage of the present invention is a component that adds sweetness. It specifically refers to saccharide sweeteners including noncentrifugal sugar such as muscovado (brown sugar), Shiroshita-to, cassonade, Wasanbon (refined Japanese sugar), sorghum sugar, maple sugar; refined sugar such as coarse sugar (coarse white sugar, coarse brown sugar, granulated sugar), soft sugar (caster sugar, yellow soft sugar, etc.), processed sugar product (cube sugar, rock sugar, powdered sugar, sugar sprinkles, etc.), and liquid sugar; monosaccharides (glucose, fructose, xylose, sorbose, galactose, isomerized sugar, etc.), disaccharides (sucrose, maltose, lactose, isomerized lactose, palatinose, etc.), oligosaccharides (fructo-oligosaccharide, malto-oligosaccharide, isomaltooligosaccharide, galactooligosaccharide, coupling sugar, etc.), sugar alcohols (erythritol, sorbitol, xylitol, mannitol, maltitol, isomaltitol, lactitol, maltotriitol, isomaltotriitol, panitol, oligosaccharide alcohol, powder reduced maltose starch syrup); and further to high intensity sweeteners including natural nonsaccharide sweeteners (stevia extract, glycyrrhizaextract, etc.) or synthetic nonsaccharide sweeteners (aspartame, acesulfame K, etc.). Of these, the nonsaccharide sweeteners may reduce the intrinsic taste or aroma of Matcha in the Matcha-containing beverage obtained by heat sterilization, so they should not be included in the beverage of the present invention. In other words, embodiments in which the sweetener component is a saccharide sweetener are preferable for the beverage of the present invention. A sweetener component consisting of a saccharide sweetener that excludes sugar alcohol is especially preferable for use.

Matcha (particularly, Tencha powders) has a delicate flavor (taste or aroma) and color tone, and a Matcha-containing beverage that is substantially free of milk components quickly loses its flavor and color tone in the heat sterilization and storage processes. According to the study by the present inventors, the decline in the flavor or color tone of Matcha may be suppressed by adding noncentrifugal sugar to the Matcha-containing beverage. An noncentrifugal sugar retains the intrinsic flavor of the raw material since the molasses in the sugar is not separated out, and it is presumed that the flavor or dye from the raw material suppresses the decline in quality that occurs while processing Matcha. Of the noncentrifugal sugars, muscovado is preferable for use. Muscovado may be in a solid form, or it may be liquid (the so-called brown sugar syrup (*kuromitsu*)). One or more of the components in a group consisting of minerals (e.g. calcium), a particular saccharide (e.g. proyd fluctose), a particular dye (e.g. methoxyphenyl glucose compound) included in muscovado is effective in suppressing the decline in quality that occurs while processing Matcha. Muscovado is preferably used at about 0.1 to 2.0 wt%, and preferably at about 0.5 to 1.0 wt% against the total beverage. If the amount falls outside the above range, the effect of suppressing the decline in quality that occurs while processing Matcha may not be obtained.

(d) Thickener Polysaccharides

The beverage of the present invention provides a Matcha-containing beverage that achieves a deep richness (savor) intrinsic to Matcha and drinkability by adjusting the viscosity to a certain range. The viscosity of the beverage of the present invention is 1.5 to 6.5 mPa·s (SV-10 viscometer, 20°C), and it is preferably 2.0 to 6.0 mPa·s.

The viscosity of the beverage may be adjusted to some extent by adjusting the types or concentration of the above components (a), (b), (c), and thickener polysaccharides may be used to adjust viscosity in a beverage with a low viscosity. The thickening polysaccharide to be used is not limited as long as it is applicable to beverages, but it is preferable to use polysaccharides having a thixotropy property in view of the texture (felt by the tongue) and the sensation going down the throat, the flavor release of Matcha (the initial impact and retention of aroma), and fermented cellulose is especially preferable. Fermented cellulose as referred to herein is cellulose produced by cellulose producing bacterium which belongs to the genus *Acetobacter*, *Pseudomonas*, *Agrobacterium*.

<Other Components>

It is preferable to include antioxidants and pH adjustors in the beverage of the present invention in view of retaining the flavor or color tone of Matcha. By adjusting the pH of the beverage of the present invention to 5.5 to 7.5, preferably 6.0 to 7.0, it is possible to retain a good flavor and color tone of the Matcha-containing beverage.

Components commonly used in Matcha-containing beverages other than those mentioned above (e.g. aroma, dyes, emulsifier, etc.) may also be used. However, it is preferable not to add these components to the beverage, since the intrinsic taste, aroma and color of Matcha that is conferred to the beverage of the present invention may be diminished. Accordingly, an embodiment that is at least one of flavoring agent-free, dye-free or emulsifier-free is a preferable embodiment of the present invention. An embodiment that lacks one of the components selected from flavoring agent, dyes, and emulsifier would provide a beverage that allows savor intrinsic to Matcha to be felt more strongly, since it can prevent the unpleasant feeling of the off-taste or aftertaste caused by additives.

In addition, the sugar content of the beverage (Brix) should be adjusted to 5 to 11, more preferably 5 to 10 to allow the effect of the present invention to be felt more vividly.

The beverage of the present invention is subjected to a heat sterilization process when it is produced. Specifically, the subject beverage may be produced by mixing raw materials including (a) Matcha, (b) a green tea leaf extract and grain extract of roasted rice, (c) a sweetener component, (d) thickener polysaccharides, as well as an antioxidant, a pH adjustor and the like, and then subjecting the mixture to a predetermined homogenization process, then performing retort sterilization after filling a metal container and the like with the mixture, or performing UHT sterilization before filling a PET container and the like with the mixture. The effect of the present invention becomes more vivid with increasing heat sterilization intensity, and a canned beverage that is sterilized by retort sterilization is one of the preferable embodiments.

EXAMPLES

The details of the present invention is described by Experimental Examples and Examples without being limited thereby. Note that the analytical conditions in the Examples are as shown below.

<Measurement of Water-Insoluble Solid Amount>

A sample maintained isothermally at 25°C was well agitated to a uniform state, and the sample was measured into centrifuge tubes at 10 g each to be centrifuged at a processing temperature of 20°C, a rotation rate of 3000 rpm for 10 min using a tabletop multiple bucket centrifuge (KOKUSAN H-28F). After measuring the dry mass of the filter paper whose retained particle size is 5 $\mu$m (ADVANTEC No. 3, diameter 150 mm), the supernatant solid in each centrifuge tube after centrifugation was collected by depressurized filtration. Next, ion exchanged water was added to each centrifuge tube and the mixture was agitated, and then, the mixture was centrifuged again for 10 min under the same condition. The supernatant solid in each centrifuge tube after centrifugation was collected on the filter paper by depressurized filtration. The remaining solid was collected on the filter paper, washed with water and subjected to depressurized filtration. The total amount of ion exchange water used for washing was 100 mL. The mass was measured after drying the filter paper.

(Water-insoluble solid amount (mass%)=((Dried filter paper mass (g))-(initial dry mass of filter paper (g))/10 (g)×100.

<Measurement of Viscosity>

Viscosity was measured using SV-10 Viscometer of A & D Company, Ltd. after setting the sample temperature to 20°C.

Example 1

Green tea leaf extract and grain extract were extracted from green tea leaves and roasted rice. In addition, Matcha (a mixture of ground Tencha and ground Hojicha leaves) was mixed with the green tea leaf extract and grain extract (hereinafter referred to as tea leaf extract) to form an insoluble solid of Table 1 (No. 1-7, 10-13) after it was subjected to preliminary suspension in a certain amount of hot water, and a Matcha suspension liquid of green tea leaf extract and grain extract was produced. Samples that do not have tea leaf extracts mixed therein (Sample No. 8, 9) were prepared for comparison. To these Matcha suspension liquids (total amount), sweetener components (sugar, muscovado), thickening polysaccharide, L-ascorbic acid, sodium bicarbonate were added to adjust pH to 6.3 and the total amount was adjusted to 1 L (sugar contents of the beverages (Brix) were all approximately 8). The content liquid of the beverage (formulation) was subjected to a homogenization process, and filled into a metal can of 190 mL each, then they were subjected to retort sterilization to obtain packaged Matcha-containing beverages. The obtained beverages were assessed concerning their flavor and color tone by expert panelists (three). Flavor assessment was performed concerning the intensity of the aroma of Matcha, the intensity of the taste (richness) of Matcha, and the grainy feeling (foreign body sensation) by each panelist on a scale of 4 (◎: identified strongly, ○: identified, △: identified weakly, × not identified). The level of drinkability was also assessed in 4 stages (◎: extremely drinkable, ○: drinkable, △: somewhat not drinkable, ×: not drinkable). The comprehensive assessment (level of balance between Matcha and drinkability) was judged as ○ (desirable) and × (not desirable) by the consent of the panelists.

Table 1 shows the sensory analysis concerning the analysis value and flavor. The sensory analysis on the scale of 1 to 4 is calculated by obtaining the average value when ◎ =4, ○=3, △=2, ×=1, and rounding off the result, then further converting the obtained value to 4 stages of ◎○△×. It was found that packaged beverages that were made distributable at normal temperature by heat sterilization, substantially free of milk components and containing a sufficient amount of Matcha (i.e. beverages that contain 0.3 to 0.9 g of Matcha as water-insoluble solid content per 100 mL of beverage), turn out to be Matcha-containing beverages exhibiting deep richness (savor) intrinsic to Matcha and drinkability when Matcha is suspended in the tea leaf extract (No. 1-7). In particular, in Matcha-containing beverages containing 0.5% or more insoluble solids (0.5 g per 100 mL of beverage), adjusting the viscosity of the beverage to a range of 1.55 to 6.5 mPa·s (No. 3,6) reduced the grainy feeling of Matcha, and improved the lingering aroma after drinking and the aftertaste characteristic of the Matcha-containing beverage obtained by heat sterilization to improve drinkability.

[Table 1]

| | | No.1 | No.2 | No.3 | No.4 | No.5 | No.6 | No.7 |
|---|---|---|---|---|---|---|---|---|
| Insoluble solid content[%] | | 0.3 | 0.4 | 0.5 | 0.75 | 0.9 | 0.5 | 0.5 |
| Viscosity [mPa·s] | | – | – | 1.55 | – | – | 2 | 6.5 |
| Tea leaf extract | | Present | Present | Present | Present | Present | Present | Present |
| Sensory Analysis | Aroma of Matcha | ○ | ◎ | ◎ | ◎ | ◎ | ◎ | ○ |
| | Taste of Matcha | ○ | ◎ | ◎ | ◎ | ◎ | ◎ | ○ |
| | Grainy feeling of Matcha | × | △ | △ | △ | △ | × | × |
| | Drinkability | ◎ | ○ | ○ | ○ | ○ | ◎ | ◎ |
| | Judgment (balance between Matcha and drinkability) | ○ | ○ | ○ | ○ | ○ | ○ | ○ |

| | | No.8 | No.9 | No.10 | No.11 | No.12 | No.13 |
|---|---|---|---|---|---|---|---|
| Insoluble solid content[%] | | 1.0 | 0.5 | 0.05 | 0.25 | 1.0 | 0.5 |
| Viscosity [mPa·s] | | 1.5 | – | 1.25 | – | 1.75 | 22 |
| Tea leaf extract | | Not present | Not present | Present | Present | Present | Present |
| Sensory Analysis | Aroma of Matcha | ◎ | ○ | × | △ | ◎ | ◎ |
| | Taste of Matcha | ◎ | ○ | × | △ | ◎ | ◎ |
| | Grainy feeling of Matcha | ◎ | ○ | × | × | ○ | × |
| | Drinkability | × | △ | × | ◎ | △ | ◎ |
| | Judgment (balance between Matcha and drinkability) | × | × | × | × | × | × |

**Claims**

1. A Matcha-containing beverage obtained by heat sterilization, that is substantially free of a milk component, the Matcha-containing beverage comprising Matcha, a green tea leaf extract, a grain extract being an extract of roasted rice, and a sweetener component, wherein an insoluble solid content per 100 mL of beverage is from 0.3 g to 0.9 g and wherein a viscosity at 20°C is from 1.5 to 6.5 mPa·s.

2. The Matcha-containing beverage according to Claim 1 further containing thickener polysaccharides.

3. The Matcha-containing beverage according to Claim 1 or Claim 2 containing noncentrifugal sugar as a sweetener component.

4. The Matcha-containing beverage according to any one of Claims 1 to 3, wherein the sweetener component consists of a saccharide sweetener.

**Patentansprüche**

1. Ein Matcha enthaltendes Getränk, erhalten durch Hitzesterilisation, das im Wesentlichen frei von einer Milchkomponente ist, wobei das Matcha enthaltende Getränk Matcha, einen Grünteeblatt-Extrakt, einen Kornextrakt, wobei es sich um einen Extrakt aus geröstetem Reis handelt und einen Süßstoffbestandteil umfasst, wobei ein unlöslicher Feststoffgehalt je 100 ml Getränk von 0,3 g bis 0,9 g beträgt und wobei eine Viskosität bei 20°C von 1,5 bis 6,5 mPa · s beträgt.

2. Das Matcha enthaltende Getränk nach Anspruch 1, weiter umfassend Verdickungsmittel Polysaccharide.

3. Das Matcha enthaltende Getränk nach Anspruch 1 oder Anspruch 2, enthaltend nichtzentrifugierten Zucker als einen Süßstoffbestandteil.

4. Das Matcha enthaltende Getränk nach einem der Ansprüche 1 bis 3, wobei der Süßstoffbestandteil aus einem Saccharidsüßstoff besteht.

**Revendications**

1. Boisson contenant du Matcha obtenu par appertisation, qui est sensiblement exempte de composant lacté, la boisson contenant du Matcha comprenant du Matcha, un extrait de feuille de thé vert, un extrait de céréales qui est un extrait de riz torréfié, et un composant d'agent édulcorant,
où la teneur en matière solide insoluble par 100 ml de boisson est comprise entre 0,3 g et 0,9 g, et
où la viscosité à 20 °C est comprise entre 1,5 et 6,5 mPa•s.

2. Boisson contenant du Matcha selon la revendication 1, contenant en outre des polysaccharides d'agent épaississant.

3. Boisson contenant du Matcha selon la revendication 1 ou la revendication 2, contenant du sucre non centrifugé en tant que composant d'agent édulcorant.

4. Boisson contenant du Matcha selon l'une quelconque des revendications 1 à 3, où le composant d'agent édulcorant se compose d'un agent édulcorant de saccharide.

## REFERENCES CITED IN THE DESCRIPTION

**Patent documents cited in the description**

- JP S57194749 B
- JP 2002228953 A
- WO 2013035860 A
- JP 2013055906 A